# FASCICULE DE BREVET EUROPEEN

(11) **EP 2 528 224 B1**
(45) Date de publication et mention de la délivrance du brevet: **28.01.2015**
(21) Numéro de dépôt: 11360019.1
(22) Date de dépôt: 24.05.2011
(51) Int. Cl.: H02P 23/00, E04F 10/06, E06B 9/68, H02P 1/42

(54) **Dispositif de commande d'un moteur pour volet roulant utilisable avec ou sans neutre du secteur**
Steuerungsvorrichtung eines Motors für Rolläden, der mit oder ohne einen Nullleiter für den Stromanschluss ausgestattet ist
Device for controlling a motor for roller shutter useable with or without mains supply neutral

(43) Date de publication de la demande: 28.11.2012
(73) Titulaire: HAGER CONTROLS, 67700 Saverne (FR)
(72) Inventeur: Elsass Marc, 67140 Barr (FR); Muller Steve, 67200 Strasbourg (FR)
(74) Mandataire: Littolff, Denis

(56) Documents cités:
- EP-A2- 1 901 420
- FR-A1- 2 879 047
- FR-A1- 2 919 125

## Description

La présente invention a trait à un dispositif de commande de moteur à deux bobinages prévu par exemple pour le réglage de la position d'un ouvrant de type volet roulant ou store pare-soleil. L'invention concerne également un procédé de commande d'un tel moteur.

En pratique, il existe deux modèles de dispositifs de commande de volets roulants :
- le modèle « 4 fils » qui nécessite toujours la présence du neutre et d'une phase pour s'alimenter à partir du réseau 230V/240V et qui possède quatre bornes de raccordement (Phase / Neutre / Montée / Descente), ce modèle étant utilisé dans les installations électriques actuelles en milieu domestique, tertiaire ou industriel ;
- le modèle « 3 fils » qui ne nécessite pas de raccordement au neutre, et qui s'alimente au travers de la charge (le moteur) qu'il commande, et qui possède par conséquent trois bornes de raccordement (Phase / Montée / Descente), ce modèle, tel que divulgué dans le document EP 1 901 420, étant utilisé dans les anciennes habitations où seuls la phase et les deux conducteurs d'alimentation du moteur sont disponibles, le neutre ne l'étant pas.

L'utilisation de l'un ou de l'autre de ces modèles existants de dispositifs de commande dépend en fait au premier chef de la présence ou non d'un conducteur neutre dans l'installation. La distinction entre ces modèles traduit par ailleurs un mode de fonctionnement différent pour les moteurs, commandés par des courants faibles pour les dispositifs 4 fils et par la phase pour les dispositifs 3 fils.

Le mode de commande du moteur se reflète dans la conception même du dispositif de l'invention, qui comporte à titre principal une unité de contrôle (pilotée par une interface homme-machine) connectée à un étage de puissance relié aux bobinages, et un étage d'alimentation de l'unité de contrôle. Cet étage de puissance comporte des moyens de commutation assurant la connexion entre la phase du secteur et l'un des deux conducteurs reliés aux bobinages selon les signaux émis par l'unité de contrôle.

Selon le modèle, cet étage d'alimentation est alimenté entre phase et neutre (modèle 4 fils) ou entre phase et charge (modèle 3 fils), ce qui veut dire qu'il s'alimente dans ce dernier cas au travers de la charge et qu'il convient alors de disposer d'un moteur qui n'est pas commandé par des courants faibles, comme cela est le cas dans le document FR 2 879 047.

En somme, la présence ou l'absence du conducteur neutre induit un contexte technique particulier, qui donne naissance à la problématique que se propose de résoudre la présente invention.

Jusqu'à présent, le modèle du dispositif de commande à installer dépend de la présence ou de l'absence du conducteur neutre et du type de moteur, déjà en place dans le cas d'une rénovation ou choisi dans le cadre d'une nouvelle construction.

L'objectif de la présente invention consiste en fait à proposer un unique modèle de dispositif de commande de moteur compatible avec tous types de moteurs, et apte à être alimenté par tout type d'installation électrique, que le neutre du secteur soit présent ou non.

Le dispositif se caractérise à titre principal en ce que son alimentation est connectée entre d'une part la phase et d'autre part le neutre ou au moins l'un des deux conducteurs reliés aux deux bobinages, des moyens de sélection du neutre ou d'au moins un desdits conducteurs reliés aux bobinages étant prévus en amont de l'alimentation, les moyens de commutation consistant en deux relais commandés par l'unité de contrôle, chaque relais pilotant un contact mécanique connectable à l'un des conducteurs reliés aux bobinages.

Selon un schéma retenu, le contact mobile de l'un des relais est commutable entre une position de liaison à l'un des conducteurs relié à un premier bobinage et une position de liaison au contact mobile de l'autre relais, commutable entre une position de liaison à l'autre des conducteurs relié au second bobinage et une position d'ouverture.

Les conducteurs sont en pratique reliés aux bobinages via des capteurs de fin de course aptes à détecter si les volets roulants, par exemple, sont entièrement fermés ou ouverts. Le fonctionnement ne serait pas possible sans de tels capteurs, commandant des contacteurs placés dans les conducteurs reliés aux bobinages, et qui agissent sur les moteurs lorsque les ouvrants contrôlés sont en butée haute ou basse.

Selon une possibilité, l'alimentation est classiquement à découpage, et elle est connectée à l'unité de contrôle.

Elle est placée en aval d'une fonction OU apte à sélectionner :
- au moins l'un des conducteurs reliés aux bobines, connectés en parallèle à ladite fonction d'une part ; ou
- le neutre du réseau, s'il existe, d'autre part.

La fonction OU peut en pratique être réalisée par un jeu de 3 diodes de redressement fonctionnant de la manière suivante :
- si le neutre peut en pratique être raccordé (fonctionnement en 4 fils), le courant d'alimentation du pilote circule uniquement de la phase vers le neutre à travers une première diode ;
si le neutre n'est pas raccordé au pilote (fonctionnement en 3 fils), suivant la position et l'alimentation du moteur, le courant d'alimentation du pilote circule de la phase vers le neutre, à travers le moteur, et une des deux diodes placées sur les conducteurs reliés aux bobinages ou les deux simultanément.

Dans les deux cas, le fonctionnement ne nécessite pas de gestion spécifique par le microcontrôleur, le choix du conducteur sélectionné résultant automatiquement des états de tension de chaque conducteur.

En pratique, en cas d'absence de conducteur neutre, l'alimentation se fait en utilisant :
- le conducteur de liaison au bobinage de montée (respectivement de descente) si le relais du conducteur de liaison au bobinage de descente (respectivement de montée) est fermé ou si un contacteur de fin de course liée à la descente (respectivement à la montée) de l'ouvrant est ouvert ;
- les deux conducteurs de liaison aux bobinages simultanément si aucun des relais n'est connecté à un conducteur et qu'aucun contacteur de fin de course n'est ouvert ;
- des moyens de stockage d'énergie si un bobinage est alimenté et l'autre est en fin de course.

En cas de présence du conducteur neutre, la connexion de l'alimentation se fait entre ledit conducteur et la phase.

Selon une possibilité, les moyens de stockage d'énergie consistent en une réserve d'énergie permettant un fonctionnement autonome de l'unité de contrôle, à laquelle ils sont reliés, pendant une période de l'ordre de 2 secondes.

Cette période de temps correspond au moment où le moteur, après avoir été alimenté via le bobinage de montée, est en butée, le contacteur de fin de course lié à la montée étant par conséquent ouvert, et que le moteur est commandé en « descente » (ou vice-versa). Dans ce cas, entre la mise en rotation du moteur et la fermeture du contacteur de fin de course lié à la montée, un laps de temps de moins de 2 secondes s'écoule, pendant lequel le dispositif est alimenté grâce à l'énergie stockée.

De façon avantageuse, le dispositif de commande du moteur est dimensionné pour s'intégrer dans une boîte d'encastrement murale standard, de façon à pouvoir être posée dans des emplacements et/ou logements existants dans les constructions usuelles.

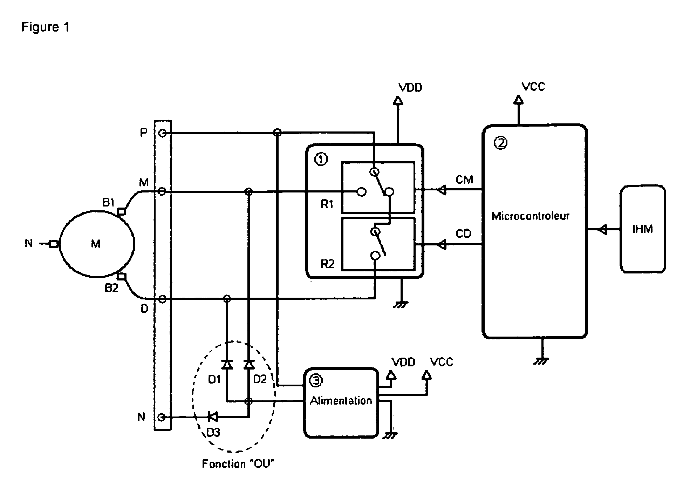

L'invention va à présent être décrite plus en détail, en référence à la figure 1 annexée, qui représente un schéma bloc simplifié du dispositif de l'invention.

L'étage de puissance (1) comporte deux relais électromécaniques (R1, R2) permettant la circulation du courant du réseau à destination des conducteurs (M, D) d'alimentation des deux bobinages (B1, B2) du moteur (M) et permettant respectivement la commande de la montée et de la descente du volet roulant dans l'hypothèse d'une telle application de l'invention.

Chaque relais (R1, R2) pilote un contact mécanique connectable à l'un des conducteurs (M, D). En l'occurrence, le contact mobile du premier relais (R1) est commutable entre une position de liaison de la phase (P) du secteur au conducteur de montée (M) relié à un premier bobinage (B1) et une position de liaison de la phase (P) au contact mobile du second relais (R2). Ce dernier est commutable entre une position de liaison de la phase (P) au conducteur de descente (D) relié à un second bobinage (B2) et une position d'ouverture.

L'alimentation (3), par exemple du type à découpage, alimente une unité de contrôle (2) du moteur (M) connectée à l'étage de puissance (1) par le biais des commandes C_{M} et C_{D}, voire l'interface homme-machine (IHM) que cette unité (2) gère secondairement. Cette interface (IHM) peut consister en un appareillage avec des boutons de commande (haut/bas/stop) ou une télécommande, etc...

Cette alimentation (3), connectée en parallèle avec l'étage de puissance (1), s'alimente de plusieurs manières différentes. A cet effet, elle est placée en sortie d'une fonction OU comportant trois entrées, à savoir :
- le conducteur (M) relié à la bobine (B1) qui est connecté à la première entrée à travers une diode D2 ;
- le conducteur (D) relié à la bobine (B2) qui est connecté à la deuxième entrée à travers une diode D1 ;
- le neutre (N) du réseau s'il existe pour la troisième entrée à travers une diode D3.

L'alimentation (3) peut donc être connectée entre phase (P) et neutre (N) via la diode (D3) ou entre phase (P) et le neutre vu « à travers » le moteur via la diode D1 ou la diode D2 ou les deux diodes D1 et D2.

Cette fonction OU assure quasiment en permanence le fonctionnement de l'alimentation (3) de l'unité de contrôle (2) quel que soit le conducteur sélectionné, et quel que soit le type d'installation (avec ou sans neutre du réseau). Dans une hypothèse bien précise, le fonctionnement de l'unité de contrôle est cependant assuré par des moyens de stockage de l'énergie et non pas via l'alimentation (3).

En effet, dans le cas où un contacteur de fin de course lié à la montée (respectivement à la descente) est ouvert, et que le bobinage (B2) lié à la descente (respectivement (B1) lié à la montée) est alimenté, alors des moyens de stockage constituant une réserve d'énergie permettant d'alimenter l'unité de contrôle pendant environ deux secondes se substituent à l'alimentation (3).

## Revendications

1. Dispositif de commande d'un moteur (M) à deux bobinages (B1, B2) pour le réglage de la position d'un ouvrant de type volet roulant ou store pare-soleil, utilisable avec ou sans le conducteur de neutre (N) du secteur, comportant une unité de contrôle (2) connectée à un étage de puissance (1) relié aux bobinages (B1, B2), et une alimentation (3) de l'unité de contrôle, l'étage de puissance (1) comportant des moyens de commutation assurant la connexion entre la phase (P) du secteur et l'un des deux conducteurs (M, D) reliés aux bobinages (B1, B2) selon les signaux émis par l'unité de contrôle (2), **caractérisé en ce que** l'alimentation (3) est connectée entre d'une part la phase (P) et d'autre part le neutre (N) ou au moins l'un des deux conducteurs (M, D) reliés aux deux bobinages (B1, B2), des moyens de sélection du neutre (N) ou d'au moins un desdits conducteurs (M, D) reliés aux bobinages (B1, B2) étant prévus en amont de l'alimentation (3), les moyens de commutation consistant en deux relais (R1, R2) commandés par l'unité de contrôle (2), chaque relais (R1, R2) pilotant un contact mécanique connectable à l'un des conducteurs (M, D) reliés aux bobinages (B1, B2).

2. Dispositif de commande d'un moteur (M) à deux bobinages (B1, B2) selon la revendication précédente, **caractérisé en ce que** le contact mobile de l'un des relais (R1) est commutable entre une position de liaison à l'un des conducteurs (M) relié à un premier bobinage (B1) et une position de liaison au contact mobile de l'autre relais (R2), commutable entre une position de liaison à l'autre des conducteurs (D) relié au second bobinage (B2) et une position d'ouverture.

3. Dispositif de commande d'un moteur (M) à deux bobinages (B1, B2) selon l'une des revendications précédentes, **caractérisé en ce que** l'alimentation (3) est à découpage, connectée à l'unité de contrôle (2), et placée en aval d'une fonction OU apte à sélectionner :
- au moins l'un des conducteurs (M, D) reliés aux bobines (B1, B2), connectés en parallèle à ladite fonction d'une part ; ou
- le neutre (N) du réseau, s'il existe, d'autre part.

4. Dispositif de commande d'un moteur (M) à deux bobinages (B1, B2) selon la revendication précédente, **caractérisé en ce que** la fonction OU est réalisée par des diodes (D1, D2, D3) de redressement placées sur des conducteurs (M, D) à connecter aux bobinages (B1, B2) du moteur (M) ou au neutre (N).

5. Dispositif de commande d'un moteur (M) à deux bobinages (B1, B2) selon la revendication précédente, **caractérisé en ce qu'**il est dimensionné pour s'intégrer dans une boîte d'encastrement murale standard.

6. Dispositif de commande d'un moteur (M) à deux bobinages (B1, B2) selon l'une quelconque des revendications précédentes, **caractérisé en ce que** des moyens de stockage d'énergie sont reliés à l'unité de contrôle (2), aptes à l'alimenter pendant une période de l'ordre de 2 secondes.

## Patentansprüche

1. Steuerungsvorrichtung eines Motors (M) mit zwei Wicklungen (B1, B2) für die Steuerung der Position eines Verschlusses vom Typ Rollladen oder Sonnenschutzvorhang, die mit oder ohne den Nullleiter (N) des Stromanschlusses verwendbar ist, die eine Kontrolleinheit (2), die an eine Leistungsstufe (1) angeschlossen ist, die mit den Wicklungen (B1, B2) verbunden ist, und eine Versorgung (3) der Kontrolleinheit aufweist, wobei die Leistungsstufe (1) Umschaltmittel aufweist, die die Verbindung zwischen der Phase (P) des Stromanschlusses und einem der zwei mit den Wicklungen (B1, B2) verbundenen Leiter (M, D) gemäß den von der Kontrolleinheit (2) gesendeten Signalen sichert, **dadurch gekennzeichnet, dass** die Versorgung (3) zwischen einerseits der Phase (P) und andererseits dem Nullleiter (N) oder mindestens einem der zwei mit den Wicklungen (B1, B2) verbundenen Leiter (M, D) angeschlossen ist, wobei Auswahlmittel des Nullleiters (N) oder mindestens eines der mit den Wicklungen (B1, B2) verbundenen Leiter (M, D) vor der Versorgung (3) vorgesehen sind, wobei die Umschaltmittel aus zwei von der Kontrolleinheit (2) gesteuerten Relais (R1, R2) bestehen, wobei jedes Relais (R1, R2) einen mechanischen Kontakt steuert, der an einen der mit den Wicklungen (B1, B2) verbundenen Leiter (M, D) anschließbar ist.

2. Steuerungsvorrichtung eines Motors (M) mit zwei Wicklungen (B1, B2) nach vorangehendem Anspruch, **dadurch gekennzeichnet, dass** der mobile Kontakt eines der Relais (R1) zwischen einer Verbindungsposition mit einem der Leiter (M), der mit einer ersten Wicklung (B1) verbunden ist, und einer Verbindungsposition im mobilen Kontakt des anderen Relais (R2) umschaltbar ist, das zwischen einer Verbindungsposition mit dem anderen der Leiter (D), der mit der zweiten Wicklung (B2) verbunden ist, und einer Öffnungsposition umschaltbar ist.

3. Steuerungsvorrichtung eines Motors (M) mit zwei Wicklungen (B1, B2) nach einem der vorangehenden Ansprüche, **dadurch gekennzeichnet, dass** die Versorgung (3) segmentierend ist, an die Kontrolleinheit (2) angeschlossen ist und nach einer Funktion ODER platziert ist, die imstande ist auszuwählen:
- mindestens einen der mit den Wicklungen (B1, B2) verbundenen Leiter (M, D), die an die Funktion parallel gekoppelt sind, einerseits, oder
- den Nullleiter (N) des Stromnetzes, sofern vorhanden, andererseits.

4. Steuerungsvorrichtung eines Motors (M) mit zwei Wicklungen (B1, B2) nach vorangehendem Anspruch, **dadurch gekennzeichnet, dass** die Funktion ODER mit Gleichrichterdioden (D1, D2, D3) umgesetzt wird, die auf Leitern (M, D) platziert sind, die an die Wicklungen (B1, B2) des Motors (M) oder an den Nullleiter (N) anzuschließen sind.

5. Steuerungsvorrichtung eines Motors (M) mit zwei Wicklungen (B1, B2) nach vorangehendem Anspruch, **dadurch gekennzeichnet, dass** sie so bemessen ist, dass sie in einen Standard-Wandeinbauschrank passt.

6. Steuerungsvorrichtung eines Motors (M) mit zwei Wicklungen (B1, B2) nach einem der vorangehenden Ansprüche, **dadurch gekennzeichnet, dass** mit der Kontrolleinheit (2) Energiespeichermittel verbunden sind, die imstande sind, während eines Zeitraums in der Größenordnung von 2 Sekunden zu versorgen.

## Claims

1. A device for controlling a motor (M) with two windings (B1, B2) to adjust the position of a movable panel of the roller blind or sunshade type, usable with or without the neutral conductor (N) of the sector, comprising a control unit (2) connected to a power stage (1) connected to the windings (B1, B2), and a power supply (3) for the control unit, the power stage (1) comprising switching means ensuring the connection between the phase (P) of the sector and one of the two conductors (M, D) connected to the windings (B1, B2) according to the signals emitted by the control unit (2), **characterized in that** the power supply (3) is connected between the phase (P) on the one hand and the neutral (N) or at least one of the two conductors (M, D) connected to the two windings (B1, B2) on the other hand, means for selecting the neutral (N) or at least one of said conductors (M, D) connected to the windings (B1, B2) being provided upstream from the power supply (3), the switching means consisting of two relays (R1, R2) controlled by the control unit (2), each relay (R1, R2) steering a mechanical contact connectable to one of the conductors (M, D) connected to the windings (B1, B2).

2. The device for controlling a motor (M) with two windings (B1, B2) according to the preceding claim, **characterized in that** the moving contact of one of the relays (R1) can be switched between a connecting position to one of the conductors (M) connected to a first winding (B1) and a connecting position to the moving contact of the relay (R2), switchable between a connecting position to the other of the conductors (D) connected to the second winding (B2) and an open position.

3. The device for controlling a motor (M) with two windings (B1, B2) according to one of the preceding claims, **characterized in that** the power supply (3) is a switching mode power supply, connected to the control unit (2), and placed downstream from an OR function able to select:
- at least one of the conductors (M, D) connected to the coils (B1, B2), connected in parallel to said function on the one hand; or
- the neutral (N) of the grid, if it exists, on the other hand.

4. The device for controlling a motor (M) with two windings (B1, B2) according to the preceding claims, **characterized in that** the OR function is achieved by rectifier diodes (D1, D2, D3) placed on conductors (M, D) to be connected to the windings (B1, B2) of the motor (M) or to the neutral (N).

5. The device for controlling a motor (M) with two windings (B1, B2) according to the preceding claim, **characterized in that** it is dimensioned to be incorporated into a standard wall installation box.

6. The device for controlling a motor (M) with two windings (B1, B2) according to any one of the preceding claims, **characterized in that** energy storage means are connected to the control unit (2), able to power it for approximately 2 seconds.
